# EUROPÄISCHE PATENTSCHRIFT

(11) **EP 3 595 915 B1**
(45) Veröffentlichungstag und Bekanntmachung des Hinweises auf die Patenterteilung: **08.11.2023**
(21) Anmeldenummer: 18712824.4
(22) Anmeldetag: 13.03.2018
(51) Int. Cl.: B60B 15/26, B60B 19/00, B60B 11/10

(54) **AUFSATZ FÜR EIN FAHRZEUGRAD**
ATTACHMENT FOR A VEHICLE WHEEL
ÉLÉMENT À MONTER SUR UNE ROUE DE VÉHICULE

(30) Priorität: 13.03.2017 DE 102017105302
(43) Veröffentlichungstag der Anmeldung: 22.01.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/056203
(87) Internationale Veröffentlichungsnummer: WO 2018/167040

(56) Entgegenhaltungen:
- WO-A1-87/05866
- DE-A1- 1 480 751
- FR-A- 1 043 038
- GB-A- 857 897
- US-A1- 2009 267 404

## Beschreibung

Die vorliegende Erfindung betrifft einen Aufsatz für ein Fahrzeugrad zur Ermöglichung eines Fahrbetriebs bei plattem Reifen.

Das Dokument FR 1 043 038 A offenbart ein Notrad mit einem schwenkbaren Segment, das in einem Winkel von etwa 100° zurückgeklappt ist, damit es bei der Montage des Notrades am Rad mit Reifenschaden nicht stört. Unter der Wirkung einer Feder richtet sich das Segment automatisch auf, sobald sich das Rad zu drehen beginnt. Dabei löst sich das schwenkbare Segment vom Boden und rastet, bevor es am Kotflügel anstößt, in einer Position ein, in der es in der Ebene des Notrades liegt.

Das Dokument DE 14 80 751 A1 offenbart lediglich ein Notrad, das aus einem äußeren Radscheibenteil und aus einem nabenseitigen, schüsselförmigen Teil besteht. Ein Fahrzeug wird mittels des Notrades wieder fahrbereit gemacht, indem auf ein Hauptrad mit beschädigtem Reifen zunächst das Nabenteil mit einem größeren von zwei Sektoren derart an der Radnabe mittels verlängerter Radschrauben befestigt wird, dass eine Aussparung für den kleineren Sektor zur Fahrbahn gerichtet zum Liegen kommt. Anschließend wird das Fahrzeug aus eigener Kraft langsam nach vorn oder nach hinten bewegt, wobei das Hauptrad über einen abgeschrägten Randabschnitt auf die Lauffläche eines Laufringes des größeren Sektors gelangt. Der kleinere Sektor wird dann mittels Schrauben auf abgewinkelten Flanschen an radial verlaufenden Rändern des größeren Segments befestigt.

Mit einem Fahrzeugrad ist dabei ein Fahrzeugrad eines Kraftfahrzeugs gemeint. Mit axialer Richtung ist vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise der Lochkreis des Fahrzeugrades. Mit einer Umfangsrichtung ist die umfängliche Richtung des Fahrzeugrades gemeint. Ein intakter Reifen ist damit in Umfangsrichtung geschlossen ausgeführt.

Die Erfindung schlägt einen Aufsatz für ein Fahrzeugrad mit den Merkmalen des Anspruchs 1 vor.

Der erfindungsgemäße Aufsatz ist mit einem Grundkörper ausgebildet, der einen klappbaren Montageabschnitt und einen Laufflächenabschnitt umfasst, wobei der Montageabschnitt im Montagezustand in Umfangsrichtung geschlossen ausgebildet ist. Der Laufflächenabschnitt ist im Montagezustand in Umfangsrichtung mit einer Unterbrechung ausgebildet. Der Laufflächenabschnitt umfasst einen Einsatzabschnitt, der, wenn der Aufsatz im am Fahrzeugrad montierten Zustand ist, in der Unterbrechung derart aufgenommen ist, dass der Laufflächenabschnitt eine geschlossene kreisförmige Laufoberfläche aufweist.

Mit dem Montagezustand ist dabei ein Zustand gemeint, in dem der Aufsatz am Fahrzeugrad angebracht wird, d.h. derjenige Zustand, in dem sich der Aufsatz befindet, bevor er endgültig am Fahrzeugrad befestigt ist, in dem jedoch mit der Montage begonnen werden kann. Beispielsweise kann der Montageabschnitt mehrstückig ausgebildet sein. Wenn der Montageabschnitt dann zusammengesetzt wird, ist er in der umfänglichen Richtung geschlossen ausgebildet und es kann mit der Montage des Aufsatzes am Fahrzeugrad begonnen werden. Mit dem Montagezustand ist also der Zustand gemeint, in dem mit der Montage an das Fahrzeugrad begonnen werden kann.

In diesem Montagezustand weist der Laufflächenabschnitt die Unterbrechung in umfänglicher Richtung auf. Hierdurch ist es möglich den Montageabschnitt und den Laufflächenabschnitt am Fahrzeugrad zu befestigen ohne das Fahrzeugrad vom Fahrzeug zu entfernen oder das Fahrzeug mit einem Wagenheber anzuheben. Hierzu wird einfach die Unterbrechung zum Boden hin ausgerichtet und die Montage vorgenommen.

Wenn der Montageabschnitt und der Laufflächenabschnitt am Fahrzeugrad befestigt sind, kann das Fahrzeug geringfügig bewegt werden. Die Unterbrechung bewegt sich dann, durch die Drehung des Fahrzeugrades, von der Ausrichtung zum Boden hin weg. Beispielsweise kann das Fahrzeug um eine halbe Drehung des Fahrzeugrads nach vorn bewegt werden, die Unterbrechung ist dann nicht mehr zum Boden hingerichtet ausgerichtet sondern zeigt nach oben. Nun kann der Einsatzabschnitt in die Unterbrechung eingesetzt bzw. aufgenommen werden. Der Aufsatz weist dann eine in umfänglicher Richtung geschlossene kreisförmige Laufoberfläche auf. Die Montage des Aufsatzes dann abgeschlossen und das Fahrzeug ist fahrbereit.

Dabei ist der Grundkörper bevorzugt als Stahlscheibe ausgebildet. Andere Materialien jedoch ebenso denkbar. Der erfindungsgemäße Aufsatz kann als kompakte alternative für ein Ersatzrad verwendet werden.

Von Vorteil ist, wenn der Einsatzabschnitt von dem Laufflächenabschnitt lösbar ist und/oder verschwenkbar oder verschiebbar mit dem Laufflächenabschnitt verbunden ist. Der Einsatzabschnitt kann also beispielsweise einfach abnehmbar ausgeführt sein bzw. lösbar mit dem Laufflächenabschnitt verbindbar sein. Der Einsatzabschnitt kann über ein lösbares oder ein unlösbares Schwenkgelenk mit dem Laufflächenabschnitt verbunden bzw. verbindbar sein. Oder kann verschieblich (lösbar oder unlösbar) gegenüber dem Laufflächenabschnitt ausgebildet bzw. befestigt sein.

Vorteilhafterweise erstreckt sich die Unterbrechung wenigstens über 1/8, vorzugsweise wenigstens über 1/6, vorzugsweise wenigstens über 1/4, der umfänglichen Erstreckung des Laufflächenabschnitts. Damit ist sichergestellt, dass genügend Freiraum besteht, um den Aufsatz am Fahrzeugrad zu befestigen, ohne das Fahrzeugrad abzunehmen oder das Fahrzeug durch einen Wagenheber anheben zu müssen.

Bevorzugt ist auch, wenn die Unterbrechung sich höchstens über die Hälfte, vorzugsweise höchstens über 1/3, der umfänglichen Erstreckung des Laufflächenabschnitts erstreckt. Hierdurch kann durch ein einfaches Verdrehen des Rades die Unterbrechung derartig vom Boden weg bewegt werden, dass der Einsatzabschnitt in einfacher Weise in den Laufflächenabschnitt aufgenommen bzw. eingefügt, eingeklappt oder eingeschoben werden kann.

Bevorzugt ist auch, wenn der Laufflächenabschnitt einstückig mit dem Montageabschnitt ausgebildet ist. Hierdurch wird der gesamte Aufsatz besonders robust und einfach zu handhaben.

Bevorzugt ist auch, wenn der Laufflächenabschnitt von dem Montageabschnitt lösbar ist. Hierdurch wird der Aufsatz in einfacher Weise verstaubar und kann besonders kompakt gelagert werden.

Erfindungsgemäß ist der Montageabschnitt klappbar. Hierdurch wird eine kompakte Lagerung des Aufsatzes, bspw. im Handschuhfach eines Fahrzeugs, möglich.

Bevorzugt ist auch, wenn der Montageabschnitt starr und unzerlegbar ist. Hierdurch wird der Aufsatz besonders einfach handhabbar und er weist eine hohe Stabilität auf.

Bevorzugt ist auch, wenn der Montageabschnitt eine Positioniereinrichtung zur Positionierung des Aufsatzes an einer Felge des Fahrzeugrads aufweist. Hierdurch lässt sich der Aufsatz in einfacher Weise zentriert am Fahrzeugrad positionieren, wodurch eine weitere Befestigung in einfacher Weise ermöglicht wird.

Bevorzugt ist auch, wenn der Montageabschnitt eine Befestigungseinrichtung zur Befestigung des Aufsatzes an der Felge des Fahrzeugrads aufweist. Über die eben genannte Befestigungseinrichtung kann der dann positionierte Aufsatz vollständig befestigt werden.

Bevorzugt ist auch, wenn die Befestigungseinrichtung von der Positioniereinrichtung unabhängig betätigbar ist. Zum Anbringen des Aufsatzes an dem Fahrzeugrad wird der Aufsatz zunächst über die Positioniereinrichtung an dem Fahrzeugrad in der vorgesehenen Position positioniert. Die Positionierung über die Positioniereinrichtung ist dabei jedoch nicht ausreichend, um einen Fahrbetrieb zu gewährleisten, sondern dient lediglich der korrekten Platzierung des Aufsatzes am Fahrzeugrad. Ist der Aufsatz über die Positioniereinrichtung in der gewünschten Position am Fahrzeugrad positioniert, so wird der Aufsatz anschließend über die Befestigungseinrichtung fest mit dem Fahrzeugrad verbunden, vorzugsweise verspannt. Die Positioniereinrichtung bleibt vorteilhafterweise gegenüber der Felge des Fahrzeugrads unverspannt auch wenn der Aufsatz endgültig am Fahrzeugrad befestigt ist. Die Positioniereinrichtung ist derart ausgebildet, dass sie eine zentrierte Anordnung des Aufsatzes am Fahrzeugrad ermöglicht, wobei die Befestigungseinrichtung unabhängig von der Positioniereinrichtung betätigbar ist, wobei durch Betätigen der Befestigungseinrichtung der Aufsatz fest am Fahrzeugrad befestigbar, vorzugsweise verspannbar, ist.

Bevorzugt ist auch, wenn wenigstens der Laufflächenabschnitt, vorzugsweise und auch der Montageabschnitt, ein felgenseitiges Teilstück und ein davon lösbares felgenabgewandtes Teilstück aufweist, wobei das felgenseitige Teilstück und das felgenabgewandte Teilstücks des Laufflächenabschnitts, im zusammengesetzten Zustand einen Aufnahmeabschnitt bilden, in dem ein Laufflächenkörper formschlüssig, insbesondere über einen formschlüssigen Hintergriff, gehalten ist. Hierdurch kann in einfacher Weise ein Laufflächenkörper sicher an dem Aufsatz befestigt werden.

Vorzugsweise ist dieser Laufkörper aus einem elastischen Gummimaterial bzw. Polymermaterial gebildet. Die formschlüssige Halterung, bzw. der formschlüssige Hintergriff, des Laufflächenkörpers kann durch eine schwalbenschwanzförmige Rinne, die zwischen den beiden Teilstücken gebildet ist, ausgeführt sein, wobei der Laufflächenkörper einen entsprechenden komplementär zu dieser Rinne ausgebildeten Abschnitt aufweist der in dieser Rinne formschlüssig aufnehmbar ist.

Vorteilhaft ist auch, wenn der Laufflächenkörper stoßdämpfend ausgebildet ist, vorzugsweise wobei der Laufflächenkörper aus einem elastisch federnden Material gebildet ist und/oder eine elastisch federnde Struktur aufweist, insbesondere eine Hohlräume und/oder Löcher umfassende Struktur aufweist. Hierdurch kann der Laufflächenkörper Fahrbahnunebenheiten abfedern. Denkbar ist jedoch auch ein luftgefüllter Laufflächenkörper ähnlich eines Reifens. Denkbar ist ein Laufflächenkörper aus einem Polymermaterial mit im Wesentlichen in axialer Richtung verlaufenden Durchbrüchen, welche zu einer elastisch dämpfenden Eigenschaft des Laufflächenkörpers führen. Denkbar sind jedoch auch andere Strukturen des Laufflächenkörpers, die zu den federnden Eigenschaften führen, insbesondere sind hierzu Hohlräume, die geschlossen oder offen sein können, im Laufflächenkörper denkbar.

Es kann vorteilhaft sein, wenn der Grundkörper Durchbrüche aufweist. Diese Durchbrüche können zum einen dazu dienen das Gewicht des Grundkörpers und damit des Aufsatzes zu reduzieren. Zum anderen können diese Durchbrüche dazu dienen, dass der Aufsatz in einfacher Weise zusammenklappbar oder zusammenlegbar ist. In zusammengeklapptem oder zusammengelegtem Zustand kann vorzugsweise wenigstens ein von der Oberfläche des Grundkörpers abstehendes Element, wie beispielsweise die Befestigungseinrichtung oder ein Teil der Befestigungseinrichtung, in einen derartigen Durchbruch hineinragen.

Bevorzugt ist auch, wenn die Befestigungseinrichtung wenigstens ein, ggf. mehrere, lösbare Befestigungsmittel umfasst. Das Befestigungsmittel kann hierzu beispielsweise an einem Haltebock der Befestigungseinrichtung lösbar befestigt sein, bzw. lösbar befestigbar sein. Eine derartige lösbare Befestigung ist beispielsweise über eine Schraubverbindung realisierbar.

Vorteilhaft ist auch, wenn die Befestigungseinrichtung derart ausgebildet ist, dass das lösbare Befestigungsmittel in wenigstens zwei in radialer Richtung versetzt zueinander angeordneten Positionen in jeweils auf einen bestimmten Felgendurchmesser angepassten, vorgesehenen Positionen mit dem Montageabschnitt verbindbar sind. Beispielsweise kann die Befestigungseinrichtung hierzu wenigstens zwei in radialer Richtung versetzt zueinander angeordnete Halteböcke umfassen, so dass je nach Felgendurchmesser des Fahrzeugrades, auf welches der Aufsatz aufgesetzt werden soll, das Befestigungsmittel dann über den entsprechenden Haltebock befestigt und damit mit dem Grundkörper bzw. dessen Montageabschnitt verbunden werden kann. Hierdurch kann ein und derselbe Aufsatz beispielsweise für 17 Zoll und 18 Zoll Felgen verwendet werden.

Bevorzugt ist auch, wenn die Befestigungseinrichtung einen Kopplungsmechanismus umfasst, der eine Bewegung wenigstens zweier beweglicher, vorzugsweise aller beweglichen, Befestigungsmittel beim Betätigen, vorzugsweise verspannen, der Befestigungseinrichtung in radialer Richtung und/oder in axialer Richtung koppelt, vorzugsweise wobei der Kopplungsmechanismus derart ausgebildet ist, dass die Bewegung der gekoppelten beweglichen Befestigungsmittel gleichförmig ist. Hierdurch erfolgt stets eine gleichförmige und zentrierendes Verspannung des Montageabschnitts bei der Befestigung.

Bevorzugt ist auch, wenn die Befestigungseinrichtung, vorzugsweise wenigstens eines der Befestigungsmittel, vorzugsweise mehrere, insbesondere sämtliche Befestigungsmittel, einen Hakabschnitt umfassen, der ausgebildet ist, um einen Abschnitt, insbesondere ein Felgenhorn, der Felge des Fahrzeugrads zu hintergreifen. Durch eine besonders sichere Befestigung möglich.

Bevorzugt ist auch, wenn die Befestigungseinrichtung derart ausgebildet ist, dass sie, insbesondere über Kontaktabschnitte, die vorzugsweise an den Befestigungsmitteln angeordnet sind, die Felge, insbesondere das Felgenhorn, auf wenigstens einem Sechstel, vorzugsweise einem Viertel, vorzugsweise einem Drittel, vorzugsweise der Hälfte, deren, bzw. dessen, umfänglicher Erstreckung kontaktiert, wenn der Montageabschnitt an dem Fahrzeugrad befestigt ist. Hierdurch wird die Kraft zur Befestigung möglichst großflächig verteilt und das Risiko einer Beschädigung der Felge wird minimiert. Bevorzugt ist auch, wenn die Befestigungseinrichtung derart ausgebildet ist, dass der Montageabschnitt beim Befestigen und Verspannen an der Felge des Fahrzeugrads in axialer Richtung zur Felge hin gedrängt wird. Dies sorgt eine besonders sichere Befestigung an der Felge. Bevorzugt ist auch, wenn die Befestigungseinrichtung, eine in axialer Richtung gesehen nach radial innen, vorzugsweise linear oder bogenförmig, abfallende Spannfläche umfasst, wobei die Befestigungseinrichtung derart ausgebildet ist, dass sich die Spannfläche beim Befestigen und Verspannen des Aufsatzes an der Felge nach radial innen bewegt, insbesondere verschiebt, und die Spannfläche derart ausgebildet ist, dass der Montageabschnitt beim Befestigen und Verspannen an der Felge des Fahrzeugrads in axialer Richtung zur Felge hin gedrängt wird. Hierdurch spannt sich der Aufsatz quasi von selbst beim Anziehen der Betätigungseinrichtung gegen die Felge, wenn die Betätigungseinrichtung betätigt wird.

Die Befestigungseinrichtung kann auch derart ausgeführt sein, dass der Aufsatz im Bereich Lochkreises des Originalrades befestigt werden kann. Beispielsweise können hierzu die Originalschrauben des Fahrzeugrades durch Schrauben mit einem Innengewinde ersetzt werden, so dass der Aufsatz im dieses Innengewinde eingeschraubt werden kann oder die Originalschrauben des Fahrzeugrades können durch spezielle Schrauben ersetzt werden, über die sowohl der Aufsatz als auch das Originalrad befestigt werden. Bei Fahrzeugrädern mit Zentralverschluss kann dieser entfernt und durch ein geeignetes Befestigungsinstrument, beispielsweise ein Gewindehülse, ersetzt werden. In dieser Gewindehülse kann dann der Aufsatz befestigt werden. Bevorzugt ist jedoch eine Ausführungsform, bei der Grundkörper im Wesentlichen kreisscheibenförmig ausgebildet ist und beim Blick in axialer Richtung im Wesentlichen den Umriss des Reifens, vorzugsweise und des Felgenbetts, überdeckt, wenn der Aufsatz am Fahrzeugrad befestigt ist.

Denkbar ist auch ein Aufsatz für ein Fahrzeugrad zur Ermöglichung eines Fahrbetriebs bei eingeschränkter Reifenfunktion mit einem Grundkörper und einer Befestigungseinrichtung zur Befestigung des Aufsatzes an der Felge des Fahrzeugrads, wobei der Grundkörper in einer axialen Richtung A gesehen kreis- oder weitestgehend kreisringförmig ausgebildet ist, wobei der Aufsatz einen Verspannaufsatz für die Befestigungseinrichtung umfasst, der ausgebildet ist um radial außenliegend um die Befestigungseinrichtung an dem Aufsatz befestigt zu werden und im befestigten Zustand die Fahrbahn derart zu kontaktieren, dass ein Einrastmechanismus des Verspannaufsatzes derart verspannt wird, dass er radial nach innen Druck auf die Befestigungseinrichtung ausübt. Der Vorspannaufsatz weist hierzu bspw. einen Einrastmechanismus auf, der eine Verspannung nach radial innen erlaubt, jedoch ein Lösen dieser Verspannung nach radial außen verhindert.

Hierzu kann der Einrastmechanismus ein federvorgespanntes Eingriffselement aufweisen, das in ein Druckelement mit entsprechenden Ausnehmungen eingreifen kann. Dabei erfolgt dieses Eingreifen derart, dass das Druckelement frei nach radial innen bewegbar ist. Mit einem entsprechenden Lösewerkzeug kann das Eingriffselement zurückgezogen werden, so dass das Druckelement auch nach radial außen bewegt werden kann und der Aufsatz vom Fahrzeugrad gelöst werden kann. Andere Ausbildungen des Einrastmechanismus sind denkbar, entscheidend ist, dass der Einrastmechanismus frei nach radial innen Druck auf die Befestigungseinrichtung bzw. die Befestigungsmittel ausüben kann und an einer Freigabe bzw. einer Bewegung nach radial außen gehindert ist. Bzw. die Freigabe oder Bewegung erst nach Lösen, vorzugsweise über ein entsprechendes Werkzeug, des Einrastmechanismus erfolgt.

Weitere Merkmale, Anwendungsmöglichkeiten und Vorteile der Erfindung ergeben sich aus der nachfolgenden Beschreibung von Ausführungsbeispielen, die anhand der Zeichnung erläutert werden.

Es zeigen:
- Figur 1: eine erste Ausführungsform eines nicht erfindungsgemäßen Aufsatzes im Montagezustand;
- Figur 2: der Aufsatz aus Figur 1 in dem Zustand in dem er am Fahrzeugrad endgültig befestigt wird, perspektivisch aus zwei Ansichten;
- Figur 3: eine weitere Ausführungsform eines nicht erfindungsgemäßen Aufsatzes;
- Figur 4: eine Ausführungsform eines erfindungsgemäßen Aufsatzes ohne Einsatzabschnitt;
- Figur 5: eine Detaildarstellung eines Ausschnitts um eine Positioniereinrichtung im am Fahrzeugrad positionierten Zustand;
- Figur 6: eine Detaildarstellung eines Ausschnitts um eine Befestigungseinrichtung im am Fahrzeugrad befestigten Zustand;
- Figur 7: eine Ausschnitt aus Figur 6;

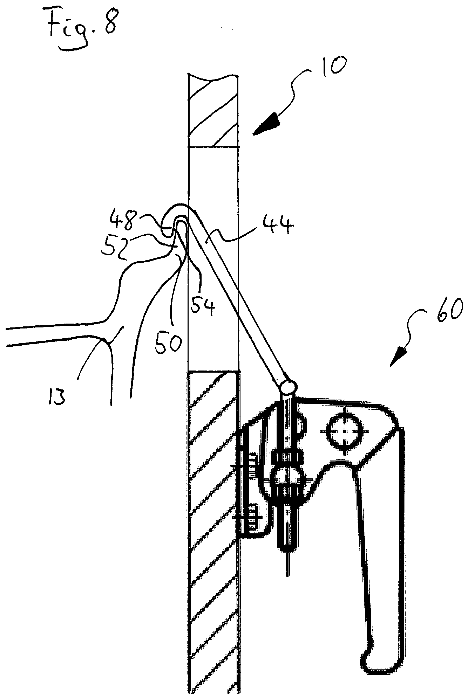

- Figur 8: eine alternative Befestigungseinrichtung;
- Figur 9: eine weitere Ausführungsform eines nicht erfindungsgemäßen Aufsatzes; und
- Figur 10: eine weitere Ausführungsform eines nicht erfindungsgemäßen Aufsatzes mit einem Verspannaufsatz.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

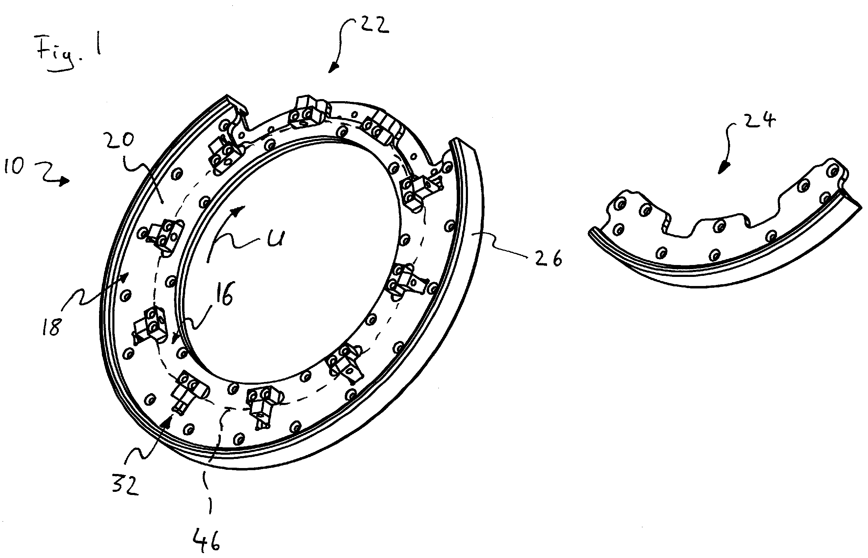

Figur 1 zeigt in schematischer Darstellung einen Aufsatz 10 für ein in Figur 1 nicht dargestelltes Fahrzeugrad 12 mit einer Felge 13 zur Ermöglichung eines Fahrbetriebs bei plattem Reifen 14.

Der Aufsatz 10 umfasst einen Montageabschnitt 16 und einen Laufflächenabschnitt 18. Der Montageabschnitt 16 und der Laufflächenabschnitt 18 sind Teil eines Grundkörpers 20 des Aufsatzes 10.

Der Montageabschnitt 16 ist im Montagezustand in umfänglicher Richtung U geschlossen ausgebildet. Im vorliegend in Figur 1 gezeigten Ausführungsbeispiel ist der Montageabschnitt 16 starr und unzerlegbar ausgebildet.

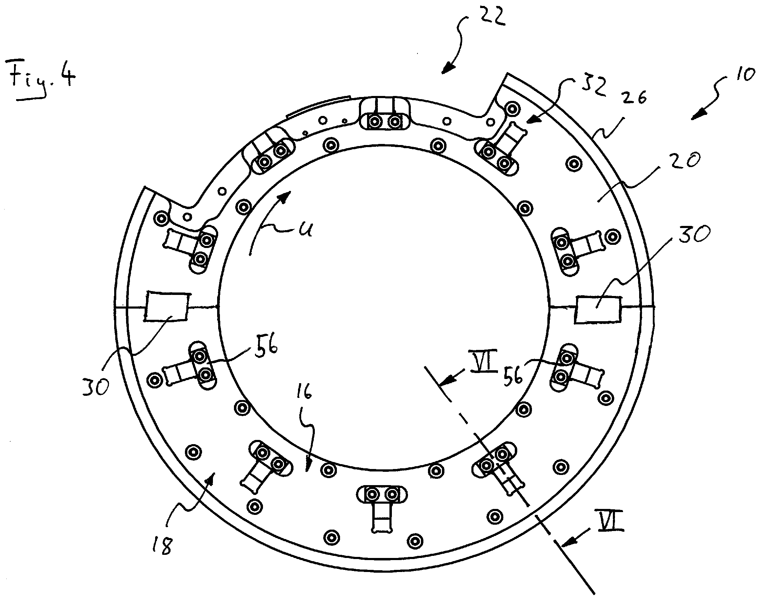

Im Sinne der Erfindung sind jedoch nur Ausführungsformen bei denen der Montageabschnitt 16 klappbar ausgebildet ist (siehe Figur 4).

Mit dem Montagezustand ist dabei ein Zustand gemeint, indem der Aufsatz 10 am Fahrzeugrad 12 angebracht wird, d.h. derjenige Zustand, in dem sich der Aufsatz 10 befindet, bevor er endgültig am Fahrzeugrad 12 befestigt ist, in dem jedoch mit der Montage begonnen werden kann. Wenn der Montageabschnitt 16 mehrstückig ausgebildet ist, so wird er zunächst zusammengesetzt und ist dann in der umfänglichen Richtung geschlossen ausgebildet. Nach dem Zusammensetzen des Montageabschnitts 16 kann dann mit der Montage des Aufsatzes 10 am Fahrzeugrad 12 begonnen werden.

Mit dem Montagezustand ist also der Zustand gemeint, indem mit der Montage an das Fahrzeugrad 12 begonnen werden kann.

In diesem Montagezustand, wie er in Figur 1 gezeigt ist, weist der Laufflächenabschnitt 18 eine Unterbrechung 22 in umfänglicher Richtung U auf. Der Aufsatz 10 bzw. dessen Laufflächenabschnitt 18 umfassen einen Einsatzabschnitt 24. Der Einsatzabschnitt 24 ist komplementär zur Unterbrechung 22 ausgebildet.

Beim Ausführungsbeispiel von Figur 1 ist der Einsatzabschnitt 24 von dem Laufflächenabschnitt 18 lösbar und kann zur Befestigung mit diesem Verschraubt werden. Es ist jedoch ebenso denkbar den Einsatzabschnitt 24 mit dem Laufflächenabschnitt 18 verschwenkbar oder verschiebbar verbunden auszubilden, wobei diese Verbindungen lösbar oder unlösbar ausgeführt sein können.

Durch die Unterbrechung 22 ist es möglich den Montageabschnitt 16 und den Laufflächenabschnitt 18 am Fahrzeugrad 12 zu befestigen ohne das Fahrzeugrad 12 vom Fahrzeug zu entfernen oder das Fahrzeug mit einem Wagenheber anzuheben.

Zur Montage des Aufsatzes 10 am Fahrzeugrad 12 wird einfach die Unterbrechung 22 zum Boden hin ausgerichtet und der Montageabschnitt am Fahrzeugrad 12 montiert. Auf diesen Montagevorgang wird weiter unten noch im Detail eingegangen.

Im Ausführungsbeispiel von Figur 1 ist der Laufflächenabschnitt 18 einstückig mit dem Montageabschnitt 16 ausgebildet. Laufflächenabschnitt 18 und Montageabschnitt 16 werden also gleichzeitig am Fahrzeugrad 12 montiert.

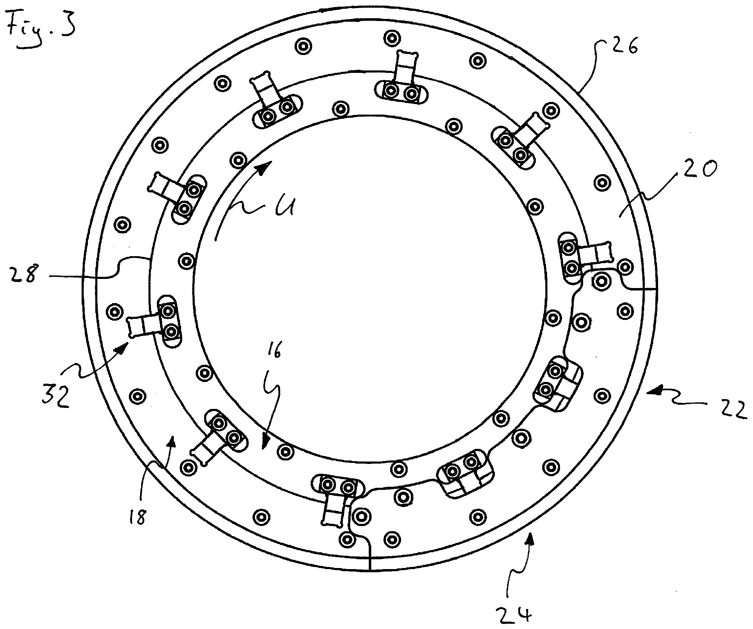

Bei Ausführungsformen bei denen der Laufflächenabschnitt 18 von dem Montageabschnitt 16 lösbar ist (siehe Figur 3), kann zunächst der Montageabschnitt 16 am Fahrzeugrad 12 montiert werden und dann der Laufflächenabschnitt 18 am Montageabschnitt 16 angebracht werden. Der Laufflächenabschnitt 18 lässt sich in einfacher Weise am bereits am Fahrzeugrad 12 befestigten Montageabschnitt 16 anbringen, da durch die Unterbrechung 22 genügend Raum zum Boden hin besteht.

Wenn der Montageabschnitt 16 und der Laufflächenabschnitt 18 am Fahrzeugrad 12 befestigt sind, kann das Fahrzeug geringfügig bewegt werden. Die Unterbrechung 22 bewegt sich dann, durch die Drehung des Fahrzeugrades 12, von der Ausrichtung zum Boden hin weg. Beispielsweise kann das Fahrzeug um eine halbe Drehung des Fahrzeugrads 12 nach vorn bewegt werden, die Unterbrechung 22 ist dann nicht mehr zum Boden hin ausgerichtet, sondern zeigt nach oben.

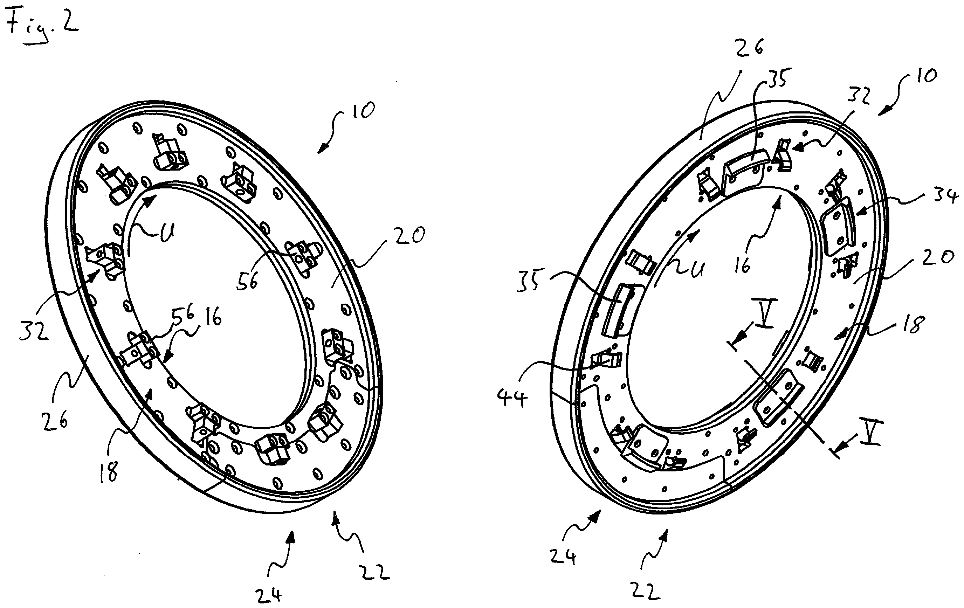

Nun kann der Einsatzabschnitt 24 in die Unterbrechung 22 eingesetzt bzw. aufgenommen werden. Der Aufsatz 10 bzw. dessen Laufflächenabschnitt 18 weist dann eine in umfänglicher Richtung U geschlossene kreisförmige Laufoberfläche 26 auf (siehe Figur 2). Die Montage des Aufsatzes 10 ist dann abgeschlossen und das Fahrzeug ist fahrbereit.

Dieser Zustand, in dem der Einsatzabschnitt 24 in die Unterbrechung 22 eingesetzt ist, ist in Figur 2 gezeigt. Der Übersichtlichkeit halber ist das Fahrzeugrad 12 in Figur 2 nicht gezeigt.

Die Unterbrechung 22 erstreckt sich vorteilhafterweise wenigstens über 1/8, vorzugsweise wenigstens über 1/6, vorzugsweise, wie in Figur 1 gezeigt, wenigstens über 1/4, der umfänglichen Erstreckung des Laufflächenabschnitts 18.

Die Unterbrechung erstreckt sich vorteilhafterweise höchstens über die Hälfte, vorzugsweise höchstens über 1/3, der umfänglichen Erstreckung des Laufflächenabschnitts 18.

In Figur 3 ist eine Ausführungsform gezeigt, bei der der Laufflächenabschnitt 18 von dem Montageabschnitt 16 lösbar ist. Der in Figur 3 dargestellte Aufsatz 10 weist daher eine Trennfuge 28 auf. Der Laufflächenabschnitt 18 und der Montageabschnitt 16 können beispielsweise über eine Schraub-, Steck- und/oder Hackverbindung aneinander befestigt werden.

In Figur 4 ist eine Ausführungsform gezeigt, bei der der Montageabschnitt 16 bzw. der Aufsatz 10 gemäß der Erfindung klappbar ausgebildet ist. Der Montageabschnitt 16 weist hierzu zwei Klappmechanismen 30 auf.

Die Klappmechanismen 30 in Figur 4 sind außerdem lösbar, so dass der Montageabschnitt 16 bzw. der Aufsatz 10 auch zerlegbar ist.

Zum Anbringen des Aufsatzes 10 am Fahrzeugrad 12 weisen die in den Figuren 1 bis 5 gezeigten Aufsätze zum einen eine Befestigungseinrichtung 32 und zum anderen eine Positioniereinrichtung 34 auf. Die Befestigungseinrichtung 32 und die Positioniereinrichtung 34 sind am Montageabschnitt 16 angeordnet.

Die Positioniereinrichtung 34 ist vorteilhafterweise derart ausgebildet, dass sie auf das Felgenhorn 52 aufsetzbar ist und den Aufsatz 10 gegenüber dem Fahrzeugrad 12 zentriert. Bspw. kann die Positioniereinrichtung 34 hierzu mehrere federgespannte Positionierelemente 35 umfassen.

Die Befestigungseinrichtung 32 ist unabhängig von der Positioniereinrichtung 34 betätigbar.

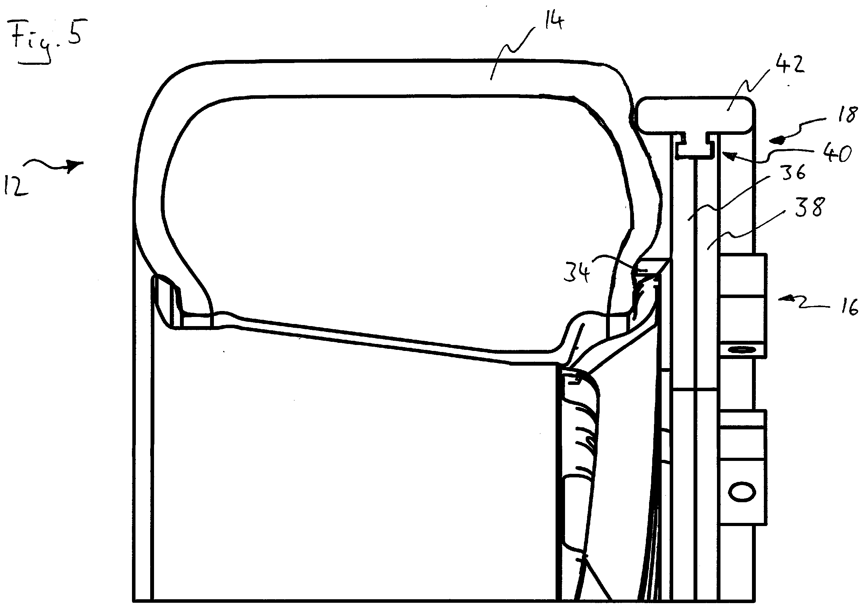

Der Laufflächenabschnitt 18 und auch der Montageabschnitt 16 weisen ein felgenseitiges Teilstück 36 und ein davon lösbares felgenabgewandtes Teilstück 38 auf (siehe Figuren 5, 6 und 7).

Das felgenseitige Teilstück 36 und das felgenabgewandte Teilstücks 38 des Laufflächenabschnitts 18 bilden im zusammengesetzten Zustand einen Aufnahmeabschnitt 40, in dem ein Laufflächenkörper 42 über einen formschlüssigen Hintergriff gehalten ist.

Bevorzugt ist, wenn die Befestigungseinrichtung 32 wenigstens ein, ggf. mehrere, vorzugsweise lösbare, Befestigungsmittel 44 umfasst.

Vorteilhaft ist auch, wenn die Befestigungseinrichtung 32 einen Kopplungsmechanismus 46 (schematisch in Figur 1 gezeigt) umfasst, der eine Bewegung wenigstens zweier beweglicher, vorzugsweise aller beweglichen, Befestigungsmittel 44 beim Betätigen, vorzugsweise verspannen, der Befestigungseinrichtung 32 in radialer Richtung R und/oder in axialer Richtung A koppelt, vorzugsweise wobei der Kopplungsmechanismus 46 derart ausgebildet ist, dass die Bewegung der gekoppelten beweglichen Befestigungsmittel 44 gleichförmig ist.

Ein derartiger Kopplungsmechanismus 46 kann beispielsweise über eine Zahnradverbindung der einzelnen Befestigungsmittel 44 ausgebildet sein. Oder er kann im Sinne eines Spannrings ausgebildet sein, der, bei Betätigung der Befestigungseinrichtung 32, alle Befestigungsmittel 44 gleichmäßig nach innen zieht. Weitere Ausbildungen des Kopplungsmechanismus 46 sind im Sinne der Erfindung ebenso möglich.

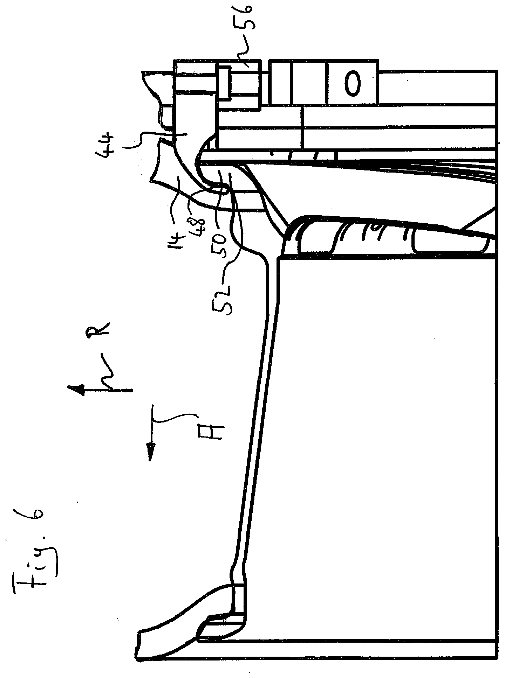

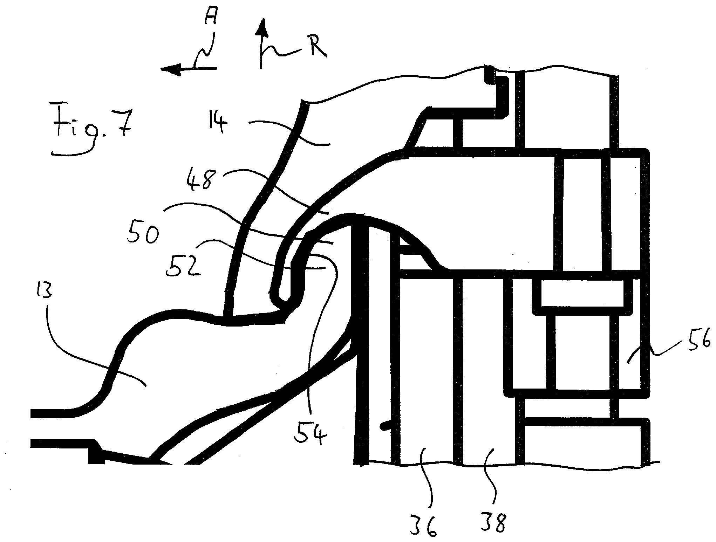

Bevorzugt ist, wenn die Befestigungseinrichtung 32, vorzugsweise wenigstens eines der Befestigungsmittel 44, vorzugsweise mehrere, insbesondere sämtliche Befestigungsmittel 44, einen Hakabschnitt 48 umfassen, der ausgebildet ist, um einen Abschnitt 50, insbesondere ein Felgenhorn 52, der Felge 13 des Fahrzeugrads 12 zu hintergreifen. In Figur 6 und Figur 7 ist dieses Hintergreifen im Detail dargestellt.

Die Befestigungseinrichtung 32 ist dabei vorzugsweise derart ausgebildet, dass der Montageabschnitt 16 beim Befestigen und Verspannen an der Felge 13 des Fahrzeugrads 12 in axialer Richtung A zur Felge 13 hin gedrängt wird.

Vorzugsweise weist die Befestigungseinrichtung 32 eine in axialer Richtung A gesehen nach radial innen, vorzugsweise linear oder bogenförmig, abfallende Spannfläche 54 auf, wobei die Befestigungseinrichtung 32 derart ausgebildet ist, dass sich die Spannfläche 54 beim Befestigen und Verspannen des Aufsatzes 10 an der Felge 13 nach radial innen bewegt, insbesondere verschiebt, und die Spannfläche 54 derart ausgebildet ist, dass der Montageabschnitt 16 beim Befestigen und Verspannen an der Felge 13 des Fahrzeugrads 12 in axialer Richtung A zur Felge 13 hin gedrängt wird.

Die Figuren 5, 6 und 7 zeigen jeweils einen Teilbereich des Aufsatzes, wie er am Fahrzeugrad 12 befestigt ist. Figur 5 zeigt dabei einen Schnitt entlang der Linie V-V aus Figur 2. In Figur 5 ist daher ersichtlich, wie die Positioniereinrichtung 34 am Felgenhorn 52 anliegt.

Figur 6 zeigt eine Darstellung entsprechend Figur 5 jedoch ist ein Schnitt entlang der Linie VI-VI aus Figur 4 gezeigt. In Figur 6 und auch Figur 7, die einen vergrößerten Teilbereich der Figur 6 zeigt, ist die Funktionsweise der Befestigungseinrichtung 32 gut erkennbar.

Bei den in den Figuren 1-7 gezeigten Ausführungsform der Befestigungseinrichtung Befestigungsmittel 44 jeweils als hakenartige Elemente, die über eine Schraubverbindung beweglich an Halteböcken 56 befestigt sind, ausgeführt.

Zur Betätigung der Befestigungseinrichtung 32 werden die Befestigungsmittel 44 derart aktuiert, dass sie sich nach radial innen bewegen. Dabei hintergreifen sie das Felgenhorn 52 mit ihren Hakabschnitten 48. Die Betätigung kann bspw. über ein Anziehen einer Spannschraube erfolgen.

Alternativ ist auch eine Befestigungseinrichtung 32 denkbar, die Befestigungsmittel 44 aufweist, die über einen, vorzugsweise verriegelbaren, Hebelmechanismus 60 bewegbar sind, wobei diese vorteilhafterweise auch einen Hakabschnitt 48 umfassen, der ausgebildet ist um das Felgenhorn 52 zu hintergreifen.

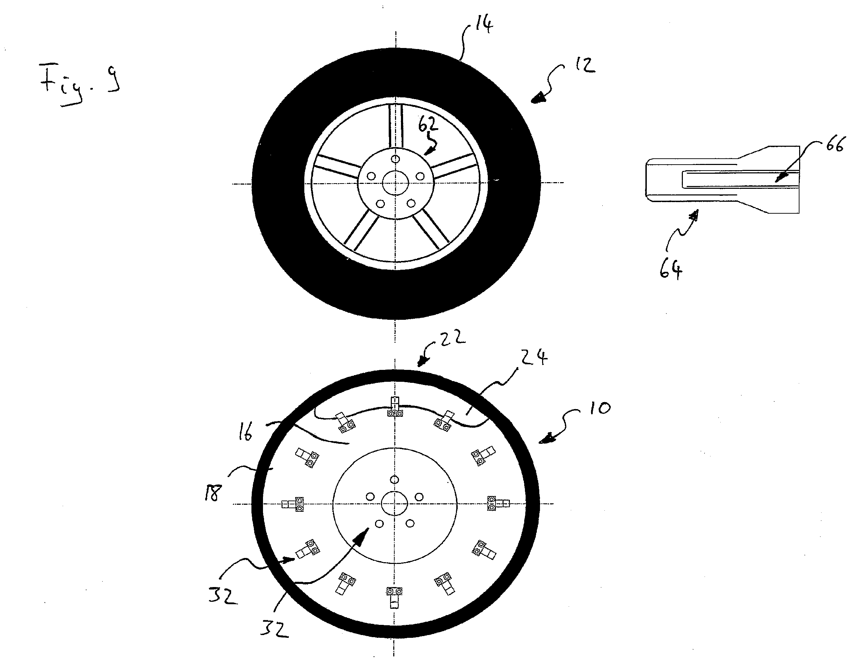

Die Befestigungseinrichtung 32 kann auch derart ausgeführt sein, dass der Aufsatz 10 im Bereich Lochkreises 62 des Originalrades befestigt werden kann. Beispielsweise können hierzu die Originalschrauben des Fahrzeugrades 12 durch Schrauben 64 mit einem Innengewinde 66 ersetzt werden, so dass der Aufsatz 10 im dieses Innengewinde 66 eingeschraubt werden kann oder die Originalschrauben des Fahrzeugrades 12 können durch spezielle Schrauben ersetzt werden, über die sowohl der Aufsatz 10 als auch das Originalrad befestigt werden. Eine derartige Ausführungsform ist in Figur 9 illustriert, wobei der Aufsatz 10 im vom Fahrzeugrad 12 abgenommenen Zustand gezeigt ist. Die Anbringung über die Schrauben 64 mit Innengewinde 66 im Bereich des Lochkreises 62 stellt dabei in Figur 9 eine zusätzliche Befestigungseinrichtung 32 dar, sie kann jedoch auch die einzige Befestigungseinrichtung 32 des Aufsatzes sein.

Bei Fahrzeugrädern mit Zentralverschluss kann dieser entfernt und durch ein geeignetes Befestigungsinstrument, beispielsweise ein Gewindehülse, ersetzt werden. In dieser Gewindehülse kann dann der Aufsatz 10 befestigt werden.

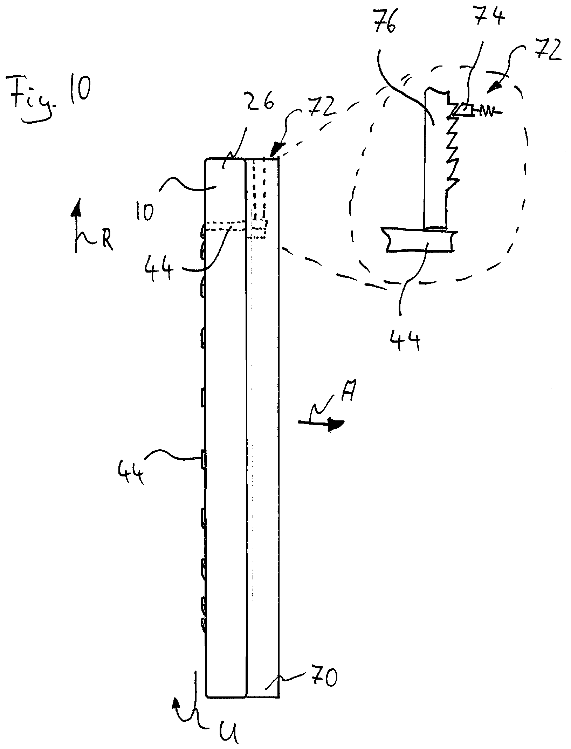

Wie in Figur 10 gezeigt ist im Sinne der vorliegenden Erfindung ist auch ein Aufsatz 10 für ein Fahrzeugrad 12 zur Ermöglichung eines Fahrbetriebs bei eingeschränkter Reifenfunktion mit einem Grundkörper 20 und einer Befestigungseinrichtung 32 zur Befestigung des Aufsatzes 10 an der Felge 13 des Fahrzeugrads 12, wobei der Grundkörper 20 in einer axialen Richtung A gesehen kreis- oder weitestgehend kreisringförmig ausgebildet ist, wobei der Aufsatz 10 einen Verspannaufsatz 70 für die Befestigungseinrichtung 32 umfasst, der ausgebildet ist um radial außenliegend um die Befestigungseinrichtung 32 an dem Aufsatz 10 befestigt zu werden und im befestigten Zustand die Fahrbahn derart zu kontaktieren, dass ein Einrastmechanismus 72 des Verspannaufsatzes 70 derart verspannt wird, dass er radial nach innen Druck auf die Befestigungseinrichtung 32 ausübt.

Der Vorspannaufsatz 70 weist hierzu einen Einrastmechanismus 72 auf, der eine Verspannung nach radial innen erlaubt, jedoch ein Lösen dieser Verspannung nach radial außen verhindert.

Hierzu kann der Einrastmechanismus 72 ein federvorgespanntes Eingriffselement 74 aufweisen, das in ein Druckelement 76 mit entsprechenden Ausnehmungen eingreifen kann. Dabei erfolgt dieses Eingreifen derart, dass das Druckelement 76 frei nach radial innen bewegbar ist. Mit einem entsprechenden Lösewerkzeug kann das Eingriffselement 74 zurückgezogen werden, so dass das Druckelement 76 auch nach radial außen bewegt werden kann und der Aufsatz 10 vom Fahrzeugrad 12 gelöst werden kann.

## Patentansprüche

1. Aufsatz (10) für ein Fahrzeugrad (12) zur Ermöglichung eines Fahrbetriebs bei plattem Reifen (14),
wobei der Aufsatz (10) einen Grundkörper (20) mit einem klappbaren Montageabschnitt (16) und einem Laufflächenabschnitt (18) umfasst,
wobei der Montageabschnitt (16) im Montagezustand in Umfangsrichtung (U) geschlossen ausgebildet ist,
wobei der Laufflächenabschnitt (18) im Montagezustand in Umfangsrichtung (U) mit einer Unterbrechung (22) ausgebildet ist,
wobei der Laufflächenabschnitt (18) weiterhin einen Einsatzabschnitt (24) umfasst, der, wenn der Aufsatz (10) im am Fahrzeugrad (12) montierten Zustand ist, in der Unterbrechung (22) derart aufgenommen ist, dass der Laufflächenabschnitt (18) eine geschlossene kreisförmige Laufoberfläche aufweist.

2. Aufsatz (10) nach Anspruch 1,
**dadurch gekennzeichnet, dass** der Einsatzabschnitt (24) von dem Laufflächenabschnitt (18) lösbar ist und/oder verschwenkbar oder verschiebbar mit dem Laufflächenabschnitt (18) verbunden ist,
und/oder dass die Unterbrechung (22) sich wenigstens über 1/8, vorzugsweise wenigstens über 1/6, vorzugsweise wenigstens über 1/4, der umfänglichen Erstreckung des Laufflächenabschnitts (18) erstreckt.

3. Aufsatz (10) nach einem oder mehreren der vorhergehenden Ansprüche,
**dadurch gekennzeichnet, dass** die Unterbrechung sich höchstens über die Hälfte, vorzugsweise höchstens über 1/3, der umfänglichen Erstreckung des Laufflächenabschnitts (18) erstreckt.

4. Aufsatz (10) nach einem oder mehreren der vorhergehenden Ansprüche, **dadurch gekennzeichnet, dass** der Laufflächenabschnitt (18) einstückig mit dem Montageabschnitt (16) ausgebildet ist.

5. Aufsatz (10) nach einem oder mehreren der Ansprüche 1 und 2, **dadurch gekennzeichnet, dass** der Laufflächenabschnitt (18) von dem Montageabschnitt (16) lösbar ist.

6. Aufsatz (10) für ein Fahrzeugrad (12) nach einem oder mehreren der vorhergehenden Ansprüche, **dadurch gekennzeichnet, dass** der Montageabschnitt (16) eine Positioniereinrichtung (34) zur Positionierung des Aufsatzes (10) an einer Felge (13) des Fahrzeugrads (12) aufweist.

7. Aufsatz (10) nach Anspruch 6, **dadurch gekennzeichnet, dass** der Montageabschnitt (16) eine Befestigungseinrichtung (32) zur Befestigung des Aufsatzes (10) an der Felge (13) des Fahrzeugrads (12) aufweist.

8. Aufsatz (10) für ein Fahrzeugrad (12) nach dem vorhergehenden Anspruch, **dadurch gekennzeichnet, dass** die Befestigungseinrichtung (32) von der Positioniereinrichtung (34) unabhängig betätigbar ist.

9. Aufsatz (10) nach einem oder mehreren der vorhergehenden Ansprüche, **dadurch gekennzeichnet, dass** wenigstens der Laufflächenabschnitt (18), und vorzugsweise auch der Montageabschnitt (16), ein felgenseitiges Teilstück (36) und ein davon lösbares felgenabgewandtes Teilstück (38) aufweist, wobei das felgenseitige Teilstück (36) und das felgenabgewandte Teilstücks (38) des Laufflächenabschnitts (18) im zusammengesetzten Zustand einen Aufnahmeabschnitt (40) bilden, in dem ein Laufflächenkörper (42) formschlüssig, insbesondere über einen formschlüssigen Hintergriff, gehalten ist.

10. Aufsatz (10) nach einem oder mehreren der Ansprüche 7 und 8,
**dadurch gekennzeichnet, dass** die Befestigungseinrichtung (32) wenigstens ein, ggf. mehrere, lösbare Befestigungsmittel (44) umfasst,
wobei die Befestigungseinrichtung (32) optional einen Kopplungsmechanismus (46) umfasst, der eine Bewegung wenigstens zweier beweglicher, vorzugsweise aller beweglichen, Befestigungsmittel (44) beim Betätigen, vorzugsweise Verspannen, der Befestigungseinrichtung (32) in radialer Richtung (R) und/oder in axialer Richtung (A) koppelt, vorzugsweise wobei der Kopplungsmechanismus (46) derart ausgebildet ist, dass die Bewegung der gekoppelten beweglichen Befestigungsmittel (44) gleichförmig ist.

11. Aufsatz (10) nach Anspruch 10, **dadurch gekennzeichnet, dass** die Befestigungseinrichtung (32), vorzugsweise wenigstens eines der Befestigungsmittel (44), vorzugsweise mehrere, insbesondere sämtliche Befestigungsmittel (44), einen Hakabschnitt (48) umfassen, der ausgebildet ist, um einen Abschnitt (50), insbesondere ein Felgenhorn (52), der Felge (13) des Fahrzeugrads (12) zu hintergreifen.

12. Aufsatz (10) nach einem oder mehreren der Ansprüche 7, 8, 10 und 11, **dadurch gekennzeichnet, dass** die Befestigungseinrichtung (32) derart ausgebildet ist, dass sie, insbesondere über Kontaktabschnitte, die Felge (13), insbesondere das Felgenhorn (52), auf wenigstens einem Sechstel, vorzugsweise einem Viertel, vorzugsweise einem Drittel, vorzugsweise der Hälfte, deren bzw. dessen umfänglicher Erstreckung kontaktiert, wenn der Montageabschnitt (16) an dem Fahrzeugrad (12) befestigt ist.

13. Aufsatz (10) nach einem oder mehreren der Ansprüche 7, 8 und 10 bis 12, **dadurch gekennzeichnet, dass** die Befestigungseinrichtung (32) derart ausgebildet ist, dass der Montageabschnitt (16) beim Befestigen und Verspannen an der Felge (13) des Fahrzeugrads (12) in axialer Richtung (A) zur Felge (13) hin gedrängt wird.

14. Aufsatz (10) nach einem oder mehreren der Ansprüche 7, 8 und 10 bis 13, **dadurch gekennzeichnet, dass** die Befestigungseinrichtung (32) eine in axialer Richtung (A) gesehen nach radial innen, vorzugsweise linear oder bogenförmig, abfallende Spannfläche (54) umfasst, wobei die Befestigungseinrichtung (32) derart ausgebildet ist, dass sich die Spannfläche (54) beim Befestigen und Verspannen des Aufsatzes (10) an der Felge (13) nach radial innen bewegt, insbesondere verschiebt, und die Spannfläche (54) derart ausgebildet ist, dass der Montageabschnitt (16) beim Befestigen und Verspannen an der Felge (13) des Fahrzeugrads (12) in axialer Richtung (A) zur Felge (13) hin gedrängt wird.

15. Aufsatz (10) nach einem oder mehreren der Ansprüche 7 und 8, **dadurch gekennzeichnet, dass** die Befestigungseinrichtung (32) wenigstens ein Befestigungsmittel (44) aufweist, das über einen, vorzugsweise verriegelbaren, Hebelmechanismus (60) bewegbar ist, wobei dieses Befestigungsmittel (44) vorteilhafterweise auch einen Hakabschnitt (48) umfasst, der ausgebildet ist, um das Felgenhorn (52) zu hintergreifen.

## Claims

1. Attachment (10) for a vehicle wheel (12) which allows the vehicle to be driven with a flat tire (14),
wherein the attachment (10) comprises a base body (20) having a foldable mounting portion (16) and a tread portion (18),
wherein the mounting portion (16) is configured to be closed in the circumferential direction (U) in the mounted state,
wherein the tread portion (18) is formed with a gap (22) in the circumferential direction (U) in the mounted state,
wherein the tread portion (18) further comprises an insert portion (24) which, when the attachment (10) is in the state mounted on the vehicle wheel (12), is received in the gap (22) such that the tread portion (18) has a closed circular tread surface.

2. Attachment (10) according to claim 1,
**characterized in that** the insert portion (24) is detachable from the tread portion (18) and/or is pivotally or slidably connected to the tread portion (18),
and/or **in that** the gap (22) extends at least over 1/8, preferably at least over 1/6, preferably at least over 1/4, of the circumferential extension of the tread portion (18).

3. Attachment (10) according to one or more of the preceding claims, **characterized in that** the gap extends at most over half, preferably at most over 1/3, of the circumferential extension of the tread portion (18).

4. Attachment (10) according to one or more of the preceding claims, **characterized in that** the tread portion (18) is formed integrally with the mounting portion (16).

5. Attachment (10) according to one or more of claims 1 and 2, **characterized in that** the tread portion (18) is detachable from the mounting portion (16).

6. Attachment (10) for a vehicle wheel (12) according to one or more of the preceding claims, **characterized in that** the mounting portion (16) has a positioning device (34) for positioning the attachment (10) on a rim (13) of the vehicle wheel (12).

7. Attachment (10) according to claim 6, **characterized in that** the mounting portion (16) has a fastening device (32) for fastening the attachment (10) to the rim (13) of the vehicle wheel (12).

8. Attachment (10) for a vehicle wheel (12) according to the preceding claim, **characterized in that** the fastening device (32) can be actuated independently of the positioning device (34).

9. Attachment (10) according to one or more of the preceding claims, **characterized in that** at least the tread portion (18), and preferably also the mounting portion (16), has a rim-side part (36) and a part (38) which can be detached therefrom and faces away from the rim, wherein the rim-side part (36) and the part (38) of the tread portion (18) facing away from the rim form, in the assembled state, a receiving portion (40) in which a tread body (42) is held in an interlocking manner, in particular *via* a form-fitting rear grip.

10. Attachment (10) according to one or more of claims 7 and 8,
**characterized in that** the fastening device (32) comprises at least one, optionally a plurality of releasable fastening means (44),
wherein the fastening device (32) optionally comprises a coupling mechanism (46) which couples a movement of at least two movable, preferably of all the movable fastening means (44) upon actuation, preferably bracing, of the fastening device (32) in radial direction (R) and/or in axial direction (A), preferably wherein the coupling mechanism (46) is designed such that the movement of the coupled movable fastening means (44) is uniform.

11. Attachment (10) according to claim 10, **characterized in that** the fastening device (32), preferably at least one of the fastening means (44), preferably several, in particular all of the fastening means (44), comprise a hook portion (48) which is configured to engage behind a portion (50), in particular a rim flange (52), of the rim (13) of the vehicle wheel (12).

12. Attachment (10) according to one or more of claims 7, 8, 10 and 11, **characterized in that** the fastening device (32) is configured to contact, in particular via contact sections, the rim (13), in particular the rim flange (52), over at least one sixth, preferably one quarter, preferably one third, preferably half, of its circumferential extent when the mounting portion (16) has been fastened to the vehicle wheel (12).

13. Attachment (10) according to one or more of claims 7, 8 and 10 to 12, **characterized in that** the fastening device (32) is so configured that the mounting portion (16), on fastening and clamping to the rim (13) of the vehicle wheel (12), is urged in the axial direction (A) towards the rim (13).

14. Attachment (10) according to one or more of claims 7, 8 and 10 to 13, **characterized in that** the fastening device (32) comprises a clamping surface (54) which, when seen in the axial direction (A), slopes radially inwards, preferably linearly or arcuately, wherein the fastening device (32) is so configured that the clamping surface (54), on fastening and clamping of the attachment (10) to the rim (13), moves, in particular slides, radially inwards, and the clamping surface (54) is so configured that the mounting portion (16), on fastening and clamping to the rim (13) of the vehicle wheel (12), is urged in the axial direction (A)towards the rim (13).

15. Attachment (10) according to one or more of claims 7 and 8,
**characterized in that** the fastening device (32) has at least one fastening means (44) which is movable *via* a, preferably lockable, lever mechanism (60), wherein said fastening means (44) advantageously also comprises a hook portion (48) configured to engage behind the rim flange (52).

## Revendications

1. Pièce rapportée (10) pour une roue de véhicule (12) pour permettre le roulage lorsque le pneu (14) est à plat,
la pièce rapportée (10) comprenant un corps de base (20) doté d'une section de montage inclinable (16) et d'une section de bande de roulement (18),
dans laquelle la section de montage (16) est conçue comme fermée dans la direction circonférentielle (U) lorsqu'elle est montée,
dans laquelle la section de bande de roulement (18) est conçue avec un évidement (22) dans la direction circonférentielle (U) lorsqu'elle est montée,
dans laquelle la section de bande de roulement (18) comprend en outre une section d'insertion (24), qui, lorsque la pièce rapportée (10) est montée sur la roue de véhicule (12), est logée dans l'évidement (22) de sorte que la section de bande de roulement (18) comprenne une surface de roulement fermée circulaire.

2. Pièce rapportée (10) selon la revendication 1,
**caractérisée en ce que** la section d'insertion (24) est détachable de la section de bande de roulement (18) et/ou est reliée en pivotement ou mobile à la section de bande de roulement (18),
et/ou **en ce que** l'évidement (22) s'étend au moins sur 1/8, de préférence au moins sur 1/6 de préférence au moins sur 1/4, de l'étendue circonférentielle de la section de bande de roulement (18).

3. Pièce rapportée (10) selon l'une ou plusieurs des revendications précédentes,
**caractérisée en ce que** l'évidement s'étend au plus sur la moitié, de préférence au plus sur 1/3, de l'étendue circonférentielle de la section de bande de roulement (18).

4. Pièce rapportée (10) selon l'une ou plusieurs des revendications précédentes, **caractérisée en ce que** la section de bande de roulement (18) est conçue d'un seul tenant avec la section de montage (16).

5. Pièce rapportée (10) selon l'une ou plusieurs des revendications 1 et 2, **caractérisée en ce que** la section de bande de roulement (18) est détachable de la section de montage (16).

6. Pièce rapportée (10) pour une roue de véhicule (12) selon l'une ou plusieurs des revendications précédentes, **caractérisée en ce que** la section de montage (16) comprend un dispositif de positionnement (34) servant à positionner la pièce rapportée (10) sur une jante (13) de la roue de véhicule (12).

7. Pièce rapportée (10) selon la revendication 6, **caractérisée en ce que** la section de montage (16) comprend un dispositif de fixation (32) servant à fixer la pièce rapportée (10) sur la jante (13) de la roue de véhicule (12).

8. Pièce rapportée (10) pour une roue de véhicule (12) selon la revendication précédente, **caractérisée en ce que** le dispositif de fixation (32) peut être actionné indépendamment du dispositif de positionnement (34).

9. Pièce rapportée (10) selon l'une ou plusieurs des revendications précédentes, **caractérisée en ce qu'**au moins la section de bande de roulement (18), et de préférence aussi la section de montage (16), comprend une sous-partie (36) côté jante et une sous-partie (38) opposée à la jante amovible par rapport à celle-ci, la sous-partie (36) côté jante et la sous-partie (38) opposée à la jante de la section de bande de roulement (18), forment une section de logement (40) lorsqu'elles sont montées, un corps de bande de roulement (42) étant ainsi maintenu par complémentarité de forme, en particulier en étant retenu par l'arrière par complémentarité de forme.

10. Pièce rapportée (10) selon l'une ou plusieurs des revendications 7 et 8,
**caractérisée en ce que** le dispositif de fixation (32) comprend au moins un, au cas échéant plusieurs moyens de fixation (44) amovibles,
dans laquelle le dispositif de fixation comprend éventuellement un mécanisme d'accouplement (46), qui accouple le mouvement d'au moins deux, de préférence tous les moyens de fixation (44) mobiles, lors de l'actionnement, de préférence lors du serrage, du dispositif de fixation (32) dans la direction radiale (R) et/ou dans la direction axiale (A), de préférence dans lequel le mécanisme d'accouplement (46) est conçu de telle sorte que le mouvement des moyens de fixation (44) mobiles accouplés est uniforme.

11. Pièce rapportée (10) selon la revendication 10, dans laquelle le dispositif de fixation (32), de préférence au moins l'un des moyens de fixation (44), de préférence plusieurs, en particulier l'ensemble des moyens de fixation (44) comprennent une section de crochet (48), qui est conçue pour bloquer par l'arrière une section (50), en particulier un rebord de jante (52), de la jante (13) de la roue de véhicule (12).

12. Pièce rapportée (10) selon l'une ou plusieurs des revendications 7, 8, 10 et 11, **caractérisée en ce que** le dispositif de fixation (32) est conçu de telle sorte qu'il, en particulier par des sections de contact, entre en contact avec la jante (13), en particulier avec le rebord de jante (52), sur au moins un sixième, de préférence un quart, de préférence un tiers, de préférence la moitié de son étendue circonférentielle, lorsque la section de montage (16) est fixée à la roue de véhicule (12).

13. Pièce rapportée (10) selon l'une ou plusieurs des revendications 7, 8 et 10 à 12, **caractérisée en ce que** le dispositif de fixation (32) est conçu de manière à ce que la section de montage (16), lors de la fixation et du serrage sur la jante (13) de la roue de véhicule (12) est poussée dans la direction axiale (A) vers la jante (13).

14. Pièce rapportée (10) selon l'une ou plusieurs des revendications 7, 8 et 10 à 13, **caractérisée en ce que** le dispositif de fixation (32) comprend une surface de serrage (54) inclinée dans la direction axiale (A) lorsque observée radialement vers l'intérieur, de préférence, linéaire ou courbée, dans laquelle le dispositif de fixation (32) est conçu de manière à ce que la surface de serrage (54) lors du serrage et de la fixation de la pièce rapportée (10) sur la jante (13) se déplace radialement vers l'intérieur, en particulier se déplace, et la surface de serrage (54) est conçue de manière à ce que la section de montage (16) lors de la fixation et le serrage sur la jante (13) de la roue de véhicule (12) est poussée dans la direction axiale (A) vers la jante (13).

15. Pièce rapportée (10) selon l'une ou plusieurs des revendications 7 et 8, **caractérisée en ce que** le dispositif de fixation (32) comprend au moins un moyen de fixation qui peut être déplacé par un mécanisme de levage (60) de préférence verrouillable, dans lequel ledit moyen de fixation (44) comprend de manière avantageuse également une section de crochet (48) qui est conçue pour bloquer par l'arrière autour du rebord de jante (52).
